# EUROPEAN PATENT SPECIFICATION

(11) **EP 0 627 596 B1**
(45) Date of publication and mention of the grant of the patent: **08.04.1998**
(21) Application number: 94303944.6
(22) Date of filing: 01.06.1994
(51) Int. Cl.: F23D 17/00, F23D 23/00, F23R 3/34

(54) **Dual fuel ultra-low NOx combustor**
Zweistoffbrenner mit sehr niedrigem NOx-Ausstoss
Brûleur à deux combustibles avec très faible production de NOx

(30) Priority: 01.06.1993 US 69496
(43) Date of publication of application: 07.12.1994
(73) Proprietor: WESTINGHOUSE ELECTRIC CORPORATION, Pittsburgh Pennsylvania 15222 (US)
(72) Inventor: Pillsbury, Paul Walter, Winter Springs, FL 32708 (US); Foss, David T., Winter Park, FL 32792 (US)
(74) Representative: van Berlyn, Ronald Gilbert

(56) References cited:
- EP-A- 0 455 487
- GB-A- 1 099 959
- US-A- 3 958 416
- PATENT ABSTRACTS OF JAPAN vol. 9, no. 29 (M-356) (1752) 7 February 1985 & JP-A-59 173 633 (HITACHI) 1 October 1984

## Description

The present invention relates to a combustor capable of burning two fuels in compressed air. More specifically, the present invention relates to a combustor for a gas turbine capable of operating on either a gaseous or liquid fuel that significantly reduces the amount of NOx produced by combustion.

In a gas turbine, fuel is burned in compressed air, produced by a compressor, in one or more combustors. Traditionally, such combustors had a primary combustion zone in which an approximately stoichiometric mixture of fuel and air was formed and burned in a diffusion type combustion process. Additional air was introduced into the combustor downstream of the primary combustion zone. Although the overall fuel/air ratio was considerably less than stoichiometric, the fuel/air mixture was readily ignited at start-up and good flame stability was achieved over a wide range in firing temperatures due to the locally richer nature of the fuel/air mixture in the primary combustion zone.

Unfortunately, use of such approximately stoichiometric fuel/air mixtures resulted in very high temperatures in the primary combustion zone. Such high temperatures promoted the formation of oxides of nitrogen ("NOx"), considered an atmospheric pollutant. It is known that combustion at lean fuel/air ratios reduces NOx formation. Such lean burning, however, requires that the fuel be well distributed throughout the combustion air without creating any locally rich zones. Unfortunately, the geometry associated with such fuel distribution creates a complex structure that makes the incorporation of a dual fuel capability into the combustor extremely difficult.

Reference is made to EP-A-0455487 which represents an example of a known combustor. As will appear hereinafter, the combustor of the invention differs essentially from what is disclosed in EP-A-0455487 by the use of first and second concentrically arranged annular passages surrounding the first fuel nozzle and means for introducing a liquid fuel into the first passage so as to circumferentially distribute said gaseous fuel around said second passage.

Accordingly, it is the general object of the current invention to provide a combustor that is capable of stable combustion with very lean mixtures of fuel and air, so as to reduce the formation of NOx, and which operates on liquid as well as gaseous fuel.

Briefly, this object, as well as other objects of the current invention, is accomplished in a gas turbine, comprising (i) a compressor for compressing air, (ii) a combustor for producing a hot gas by burning a fuel in the compressed air, and (iii) a turbine for expanding the hot gas produced by the combustor. According to one embodiment of the invention, the combustor has (i) a combustion zone, (ii) a centrally disposed first fuel nozzle in flow communication with the combustion zone and having a first discharge port for discharging a liquid fuel and a second discharge port for discharging a gaseous fuel, (iii) first and second concentrically arranged annular passages surrounding the first fuel nozzle and in flow communication with the combustion zone, (iv) means for introducing a liquid fuel into the first passage so as to circumferentially distribute the liquid fuel around the first passage, (v) means for introducing a gaseous fuel into the second passage so as to circumferentially distribute the gaseous fuel around the second passage. In one embodiment of the invention, the combustor has means for introducing a gaseous fuel into the first passage so as to circumferentially distribute the gaseous fuel around the first passage.

In another embodiment, the combustor comprises (i) a shell forming a combustion zone in which a fuel is burned in compressed air, (ii) a fuel/air pre-mixing zone enclosed by a first liner, (iii) means for introducing a fuel into each of the passages, and (iv) means, disposed within the passages, for mixing the fuel introduced into each of the annular passages with the compressed air flowing through the passages. In this embodiment, the first liner encloses second and third liners so as to form a first annular passage between the first and second liners and a second annular passage between the second and third liners, each of the annular passages having an inlet in flow communication with the compressor and an outlet in flow communication with the shell, whereby a portion of the compressed air from the compressor flows through each of the annular passages. The pre-mixing zone has a flow area defined by an inner diameter of the first liner at the first passage outlet and the shell has a flow area adjacent the passage outlets defined by an inner diameter of the shell. The shell inner diameter is at least about 40% greater that the first liner inner diameter, whereby the compressed air flowing through the passages undergoes an expansion upon exiting the passages.

Figure 1 is a longitudinal cross-section through a portion of a gas turbine in the vicinity of the combustion section.

Figure 2 is a longitudinal cross-section of the combustor shown in Figure 1 but with a steam cooling jacket added.

Figure 3 is a detailed view of the pre-mixing portion of the combustor shown in Figure 1.

Figure 4 is a transverse cross-section taken along line IV-IV shown in Figure 3.

Figure 5 is an isometric view of a portion of the pre-mixing portion of the combustor shown in Figure 3 in which flow guides extend downstream from the baffle.

Figure 6 is an alternate embodiment of the combustor according to the current invention.

Figure 7 is a transverse cross-section taken along line VII-VII shown in Figure 6.

Figure 8 is a detailed view of the portion of Figure 6 enclosed by the rectangular marked VIII.

Figure 9 is a detailed view of the portion of Figure 6 enclosed by the rectangular marked IX.

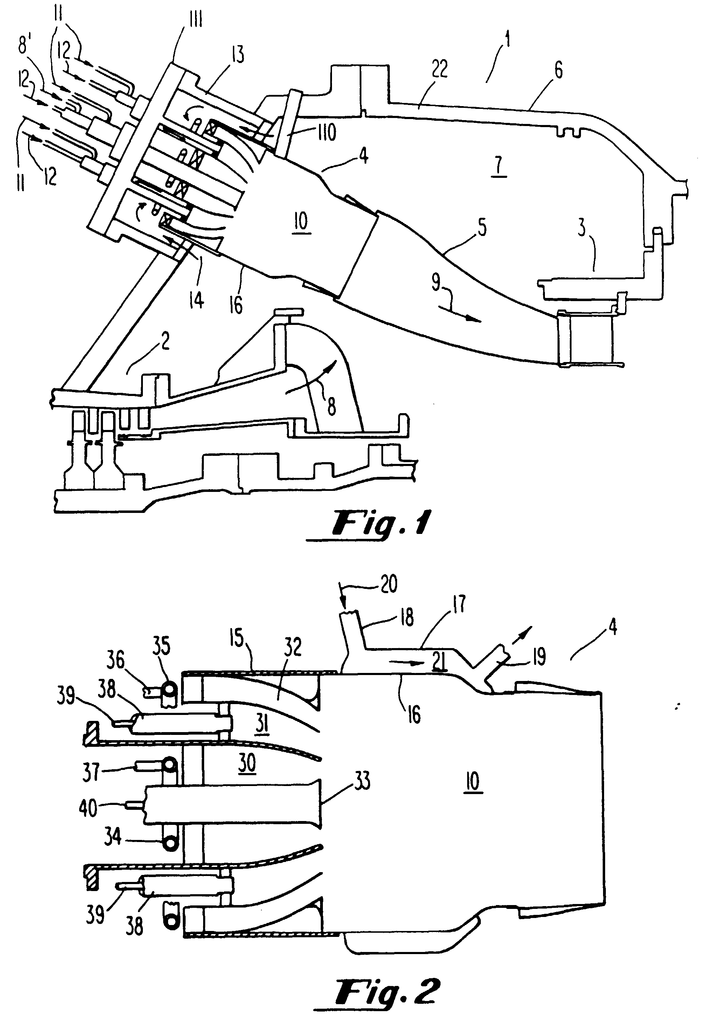

Referring to the drawings, there is shown in Figure 1 a portion of a gas turbine 1 in the vicinity of the combustion section 6. In addition to the combustion section 6, the gas turbine comprises a compressor section 2 and a turbine section 3. The current invention concerns a combustor 4 for the gas turbine 1 -- specifically, a combustor designed to generate very low levels of NOx (e.g., less than approximately 9 ppmv when the gas turbine is operating at its base load firing temperature on gas fuel and without the use of water or steam injection).

The combustion section 6 comprises a chamber 7 formed by an outer casing 22 of the gas turbine and in which a plurality of combustors 4 are circumferentially arrayed. Each combustor comprises a pre-mixing zone 14 and a combustion zone 10 downstream of the pre-mixing zone. Fuel 11,12 and compressed air 8 from the compressor 2 are mixed in the pre-mixing zone 14 and burned in the combustion zone 10. A casing 13 extends outward from the front face of the casing 22 and encloses a portion of the pre-mixing zone 14, as well as the combustor fuel supply piping. A duct 5 is connected to a vessel 16 that encloses the combustion zone 10 and directs the hot gas 9 produced by the combustor 4 to the turbine 3 for expansion.

Since the walls of the vessel 16 are exposed to the hot gas 9, it is important to cool the vessel. In the embodiment shown in Figure 1, cooling of the vessel 16 is accomplished by placing the inlet of the pre-mixing zone 14 within the casing 13, thereby causing the compressed air 8 to flow over the outside surfaces of the vessel on its way to the pre-mixing zone. Figure 2 shows another method of cooling the vessel 16, in which a jacket 17 surrounds the vessel wall. The jacket 17 has an inlet 18 connected to a source of steam 20 and an outlet 19 so that the steam flows through a passage 21 formed between the jacket and the vessel wall, thereby cooling the vessel 16. Alternatively, the jacket inlet could be connected to a source of high pressure air for cooling.

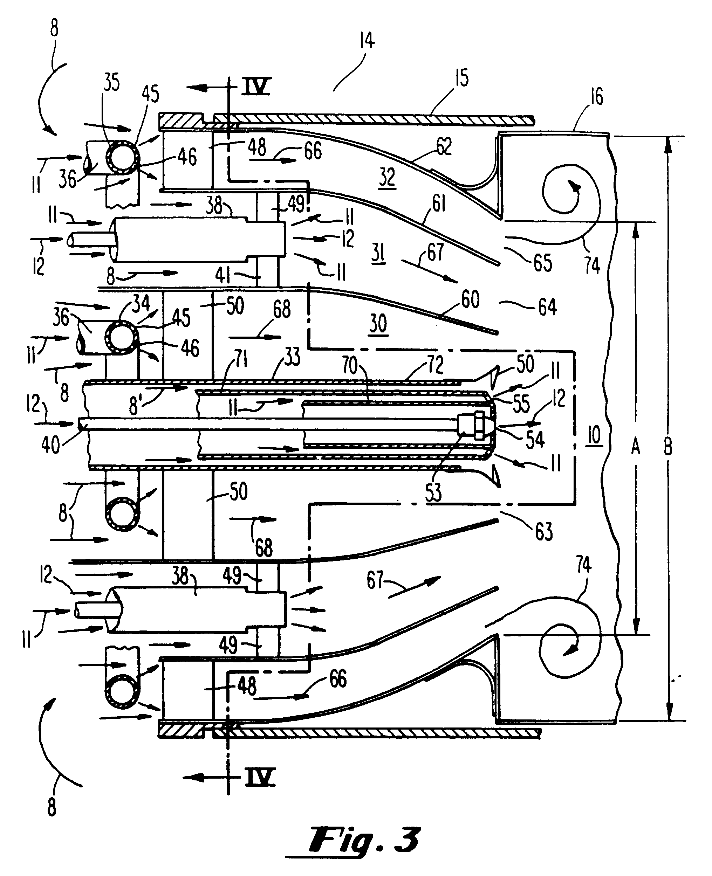

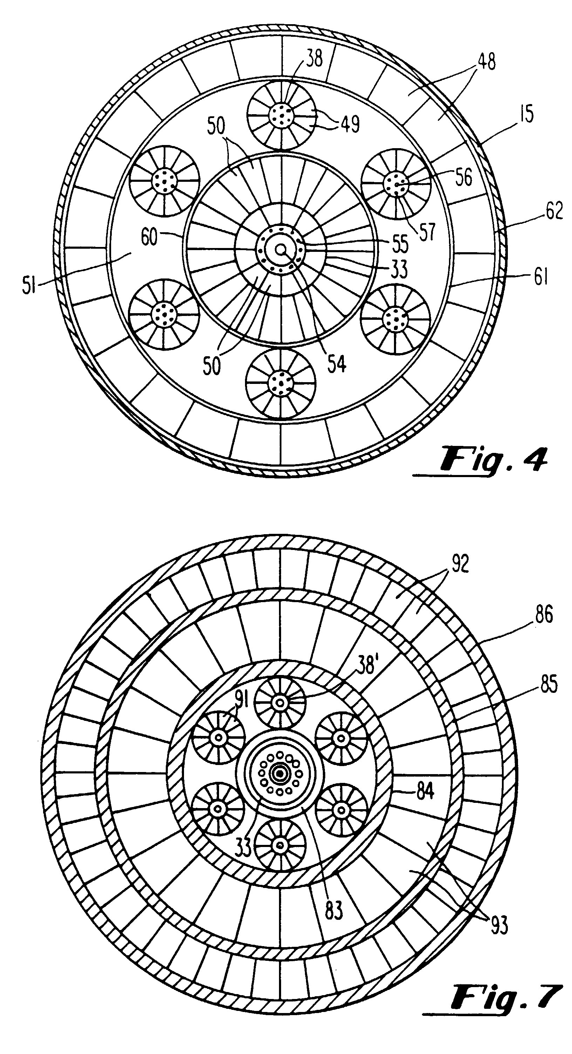

As shown in Figures 3 and 4, the pre-mixing zone 14 comprises a casing 15 that encloses three concentrically arranged liners 60-62. Centrally disposed within the inner liner 60 is a dual fuel nozzle 33. An outer annular passage 32 is formed between the outer liner 62 and the middle liner 61, a middle annular passage 31 is formed between the middle liner and the inner liner 60, and an inner annular passage 30 is formed between the inner liner and the fuel nozzle 33.

A plurality of swirl vanes 48 and 50 are circumferentially arrayed about the inner and outer passages 30 and 32, respectively. The swirl vanes may be plate-like or airfoil-shaped and are disposed at an angle to the axis of the gas turbine so as to impart swirl to the mixtures 66 and 68 of gas fuel 11 and air 8 flowing through the passages, thereby inducing good mixing of the fuel and air.

Toroidal gas fuel manifolds 34 and 35 are disposed upstream of the inlets to the inner and outer passages 30 and 32, respectively. Each of the manifolds 34 and 35 are connected to fuel supply pipes 36 that direct gas fuel 11 into the manifold. A plurality of gas fuel discharge ports 45 and 46 are circumferentially spaced around the manifolds 34 and 35. In the preferred embodiment, the discharge ports are spaced circumferentially at about 2.5 cm (1 inch) intervals in the outer manifold 35 and spaced circumferentially at about 1 cm (0.4 inch) intervals in the inner manifold 34. This spacing of the gas fuel discharge ports ensures that the gas fuel 11 is evenly distributed around the circumference of the passages 30 and 32 so as to prevent any locally rich fuel/air mixtures. Rich fuel/air mixtures have a high flame temperature that results in increased NOx production. In addition, at each circumferential fuel discharge port station, two fuel discharge ports are formed in the manifolds 34 and 35, one port 45 oriented to direct fuel at an angle radially outward to the gas turbine axis and the other port 46 oriented to direct fuel at an angle radially inward to the axis. This ensures that the gas fuel 11 is well distributed within the passages 30 and 32 in the radial direction, as well as the circumferential direction.

The central dual fuel nozzle 33, disposed within the inner passage 30, is comprised of an oil fuel supply pipe 40 that directs fuel oil 12 to a spray tip 53, as well as inner, middle and outer sleeves 70-72. The spray tip 53, which is enclosed by the inner sleeve 70, has a oil fuel discharge port 54 formed therein that sprays fine particles of oil fuel 12 into the combustion zone 10. The inner sleeve 70 and the middle sleeve 71 form an annular passage therebetween that directs gas fuel 11 to a plurality of gas fuel discharge ports 55 that introduce the gas fuel into the combustion zone 10. Note that although both gas and oil fuel 11 and 12, respectively, are shown in the drawings for the sake of explanation, it should be understood that in the preferred embodiment, the combustor 4 is operated on only one type of fuel at a time.

The middle sleeve 71 and outer sleeve 72 of the fuel nozzle 33 form an annular passage therebetween that directs compressed air 8' to a plurality of swirl vanes 50 that are attached to the outer sleeve so as to be circumferentially arrayed around the fuel nozzle 33. Swirling the air in this manner aids in mixing the fuel 11,12 exiting the nozzle into the air 8 and creates vortices that anchor the flame, thereby improving stability.

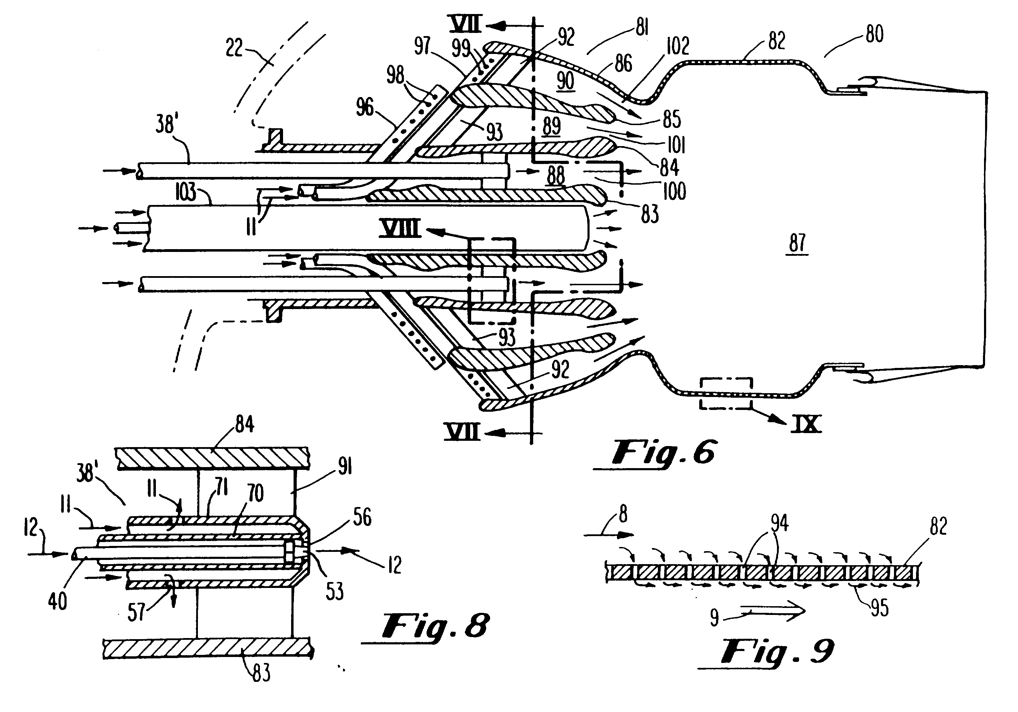

The middle passage 31 of the pre-mixing zone 14 contains a plurality of distributed dual fuel nozzles 38. The fuel nozzles 38, one embodiment of which is shown in Figure 8, are similar to the central dual fuel nozzle 33, except that the fuel nozzle 38 lacks the outer sleeve 72 and the swirl vanes 50 attached to it. Consequently, the fuel nozzles 38 have an oil fuel discharge port 56 and a plurality of gas fuel discharge ports 57, as shown in Figure 4. In the preferred embodiment, six fuel nozzles 38 are spaced around the circumference of the middle passage 31 to aid in the distribution of fuel so as to minimize the formation of locally fuel rich areas. However, the fuel introduced into the middle passage 31 by means of the fuel nozzles 38 will not be as well distributed as that introduced into the inner and outer passages 30 and 32, respectively, by the manifolds 34 and 35, thereby resulting in higher NOx production in the middle passage.

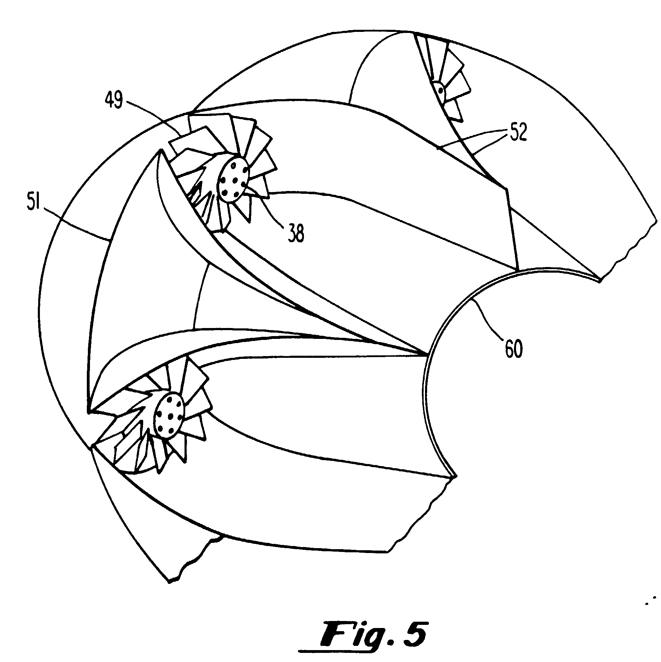

As shown best in Figure 5, a plurality of swirl vanes 49 are circumferentially arrayed around each of the fuel nozzles 38 so as to pre-swirl the air 8 that flows over the fuel nozzles and mixes with the fuel 11,12 discharged by them. In the embodiment shown in Figures 3 and 4, the gas fuel discharge ports 57 of the distributed fuel nozzles 38 are formed in the face of the nozzle, so that the swirl vanes 49 are disposed upstream of the ports and swirl only the air 8. However, as shown in the embodiment in Figure 8, the gas fuel discharge ports 57 may also be formed in the circumference of the sleeve 71 so that swirl vanes 91 are disposed upstream of the gas fuel discharge ports so as to swirl the gas fuel/air mixture.

As shown in Figures 4 and 5, a circular baffle 51 is disposed in the middle passage 31 and extends between the inner liner 60 and the middle liner 61. Segments of the baffle 51 are disposed between each of the fuel nozzles 38, thereby blocking the portions of the middle passage 31 between the fuel nozzles so as to direct the flow of compressed air 8 around each of the fuel nozzles. In order to allow the fuel/air mixture 67 to flow smoothly through the middle passage 31 downstream of the baffle 51, flow guides 52 may be located in the passage, as shown in Figure 5. The flow guides 52 extend forwardly from the ends of each segment of the baffle 51 and meet at the passage outlet 64, mid-way between each distributed fuel nozzle 38.

Referring again to Figure 1, the operation of the combustor 4 is as follows. During start-up, the compressor 2 is spun-up to ignition speed, typically approximately 18% to 20% of design speed, by a starting motor (not shown). As the compressor rotor accelerates, compressed air 8 from the compressor 2 flows into the combustor 4 from the cavity formed by the casing 13. As shown in Figure 3, after entering the combustor 4, the air is divided into three main streams in the pre-mixing zone -- one stream flowing through each of the three annular passages 30-32.

As those skilled in the art will readily appreciate, not all of the air 8 produced by the compressor 2 is used as combustion air. Instead some of the compressed air is bled from the compressor 2 and used for cooling purposes in the turbine 3. However, according to the current invention, all of the combustion air enters the combustor 4 through the pre-mixing zone 14, primarily via the passages 30-32. A small portion of the compressor air 8' -- i.e., less than approximately 2% of the combustion air -- is drawn from the chamber 7 and then re-introduced into the combustion section by flowing it through the annular passage formed between the middle and outer sleeves 71 and 72, respectively, of the central dual fuel nozzle 33, as previously discussed. While this small portion of compressed air 8' flows through the pre-mixing zone 10, it is not pre-mixed with fuel but is discharges directly into the combustion zone 10.

When ignition speed is reached, gas 11 or oil 12 fuel, as selected by the operator, is introduced into the combustion zone 10 via the central fuel nozzle 33 to provide a locally rich mixture of fuel and air downstream of the fuel nozzle in order to facilitate ignition. Combustion is established by supplying power, before the introduction of the fuel, to an igniter 110, shown in Figure 1.

As a result of the locally rich fuel/air ratio of the mixture created by the central nozzle 33 and the flame anchoring effect of the swirl vanes 50, a very stable pilot flame is obtained in a central portion of the combustion zone 10 just downstream of the nozzle. Such combustion, in which the fuel and air are mixed in a fuel rich ratio immediately upstream of the flame front is generally referred to as "diffusion" type combustion.

Unfortunately, the diffusion type combustion associated with the central dual fuel nozzle 33 results in locally high gas temperatures, and therefore, high rates of NOx formation. Thus, according to the current invention, as the speed of the gas turbine increases beyond ignition speed, the combustion of further fuel, especially when operating on gas fuel, occurs primarily in ultra-lean premix type combustion, rather than further fuel rich diffusion type combustion. As is well known in the art, lean combustion minimizes local gas temperatures within the combustion zone and, therefore, the formation of NOx. As used herein, a lean fuel/air mixture is one in which the ratio of fuel to air is less that about 0.02 by weight.

According to the current invention, when operating on gas fuel 11, such ultra-lean pre-mixed combustion is obtained by introducing the fuel at lean fuel/air mixtures into the inner and outer annular passage 30 and 32, which surround the central fuel nozzle 33, via the fuel manifolds 34 and 35. As the gas fuel 11 flows through the annular passages 30 and 32, the length of the passages and the presence of the turbulence inducing swirl vanes 48 and 50 promotes a high degree of mixing between the fuel and air. Such mixing, along with the wide distribution of the fuel by the ports 45 and 46 in the manifolds, ensures that the resulting streams of fuel and air 66 and 68 have lean fuel/air ratios throughout. As a result, there are no locally fuel rich zones that would promote the generation of NOx.

In the middle passage 31, gas fuel is introduced via the six distributed dual fuel nozzles 38. Although introducing fuel in this manner allows for leaner fuel/air ratios -- and, therefore, lower flame temperatures and NOx production -- than can be achieved by the single source fuel nozzles traditionally used, it is expected that the NOx will be higher than that associated with the ultra-lean pre-mixing achieved in the passages 30 and 32. However, use of the distributed dual fuel nozzles 38 has the advantage of allowing operation on oil fuel, as well as gas fuel. Moreover, it should be noted that the distributed fuel nozzles 38, as well as the central fuel nozzle 33, can be readily replaced for maintenance by removing a cover plate 111, shown in Figure 1, and withdrawing the nozzles from the pre-mixing zone 14.

After flowing through the annular passages 30-32, the fuel/air mixtures 66-68 exit the pre-mixing zone 14, via the passage outlets 63-65, and enter the combustion zone 10, as shown in Figure 3. In the combustion zone 10, the lean fuel/air mixtures from passages 30-32 are ignited by the flame from the central fuel nozzle 33, thereby creating additional, concentric flame fronts within the combustion zone 10 that surround the flame from the central fuel nozzle.

In the preferred embodiment, gas fuel 11 is supplied to the annular passages 30-32 sequentially. Thus, as increased loading on the turbine 3 demands higher temperatures of the hot gas 9, additional gas fuel 11, beyond that introduced by the central fuel nozzle 33 to obtain ignition, is initially supplied to only the inner annular passage 30, via the fuel manifold 34 immediately upstream of that annular passage. After the fuel/air mixture flowing through annular passage 30 has been ignited, creating an annular flame in a portion of the combustion zone surrounding the flame from the central nozzle 33, further increases in firing temperature are accomplished by increasing the gas fuel supplied to the inner annular passage 30 by its fuel manifold 34 but only until the fuel/air ratio within that annular passage reaches a pre-determined amount -- in the preferred embodiment, about 0.035 by weight.

Thereafter, further increases in load are accomplished by supplying gas fuel to outer annular passage 32, via its fuel manifold 35, thereby creating a second annular flame surrounding the first annular flame. After combus tion is established with respect to the second annular flame, the amount of fuel in the inner annular passage 30 can be reduced so that the fuel/air ratio in the inner passage drops below the pre-determined amount, preferably below 0.02, so as to maintain leaner combustion. Additional gas fuel is supplied to the outer annular passage 32 until its fuel/air ratio reaches the predetermined amount.

Still further increases in load are then accomplished by supplying gas fuel to the middle annular passage 31, via the distributed fuel nozzles 38, thereby creating a third annular flame surrounding the first annular flame. Again, after combustion is established with respect to the third annular flame, the amount of fuel in the outer annular passage 32 can be reduced so that the fuel/air ratio in the outer passage drops below the pre-determined amount, preferably below 0.02, so as to maintain leaner combustion. The result of this operating sequence is a flame that extends radially within the combustion zone 10 as the firing temperature of the combustor 6 increases without ever creating a rich fuel/air ratio stream. In this manner, very lean fuel/air mixtures 66-68, and therefore, low NOx production, can be maintained over the entire operating range.

When operating on oil fuel 12, increases in firing temperature beyond a certain amount are achieved by introducing additional oil fuel 12 through the six distributed dual fuel nozzles 38 in the middle annular passage 31, rather than through the central fuel nozzle 33. As previously discussed, although it may not be possible to achieve as lean fuel/air ratios within the middle passage 31 as in the inner and outer passages in gas fuel operation, the NOx production will be less than that resulting from operation on the central fuel nozzle 33 alone. When operating on oil fuel, no fuel is introduced into the inner and outer passages 30 and 32.

As a further refinement, according to the current invention, regardless of the type of fuel, after combustion is established with respect to the lean fuel/air mixtures flowing through the annular passages 30-32, the fuel supplied to the central fuel nozzle 33, with its associated diffusion type combustion high NOx production, may be eliminated so that only lean pre-mix combustion is utilized.

Typically, the flame stability of combustion at the lean fuel/air ratios with which the combustor 4 of the current invention operates, except for that of the diffusion flame associated with the central fuel nozzle 33, is poor, thereby creating the possibility of blow-out. However, according to the current invention, good flame stability is achieved by the use of the central diffusion flame in the center of the combustion zone and by the sudden expansion of the fuel/air mixtures as they enter the combustion zone 10 from the pre-mixing zone 14. The sudden expansion creates vortices 74 of recirculating flow that tend to anchor the flame and prevent blow-out.

The sudden expansion is created by a step change in the diameter of the flow area in going from the pre-mixing zone 14 to the combustion zone 10. As shown in Figure 3, the flow area -- that is, the cross-sectional area in a plane perpendicular to the axis of the combustor 4 -- of the pre-mixing zone 14 is defined by the inner diameter A of the outer liner 62 at the outlet 65 of the outer passage 32. The flow area of the combustion zone 10 is defined by the inner diameter B of the shell 16. In the preferred embodiment, the diameter B of the shell is at least 40% greater than the diameter A of the outer liner 62, thereby ensuring a sufficiently large abrupt increase in diameter to achieve the desired flame stabilizing effect.

Figures 6 and 7 show another embodiment of the combustor 80 according to the current invention. In this embodiment, the pre-mixing zone 81 is comprised of three annular passages 88-90 formed by four liners 83-86. A dual fuel nozzle 103 is centrally disposed as before. However, the nozzle 103 does not have an outer sleeve 72 nor the swirl vanes 50. Instead, it is enclosed by the liner 83. Gas fuel is supplied to the middle and outer passages 88 and 90 by means of a plurality radially extending spray bars 96 and 97, respectively, dispersed about the circumference of the passages. In the preferred embodiment, six spray bars 96 and 97 are utilized in each annular passage to distribute the gas fuel 11 circumferentially. In addition, a number of gas fuel discharge ports 98 and 99 are formed along each spray bar to radially distribute the fuel. Moreover, the distributed dual fuel nozzles 38', shown in Figure 8, are located in the inner passage 88, rather than in the middle passage as in the embodiment shown in Figures 1-5.

In this embodiment, the liners 83-86 are shaped so as to form throats at the passage outlets 100-102. These throats creates a venturi effect that promotes flame stability, along with the abrupt increase in diameter previously discussed, and prevents flash backs. In addition, the shell 82 that encloses the combustion zone 87 has transpiration cooled walls. As shown in Figure 9, a small amount of cooling air is bled through numerous small holes 94 in the shell 82 to create a film 95 of cooling air along the inner surface of the shell.

This embodiment is especially suited for retro-fitting into existing gas turbines since the pre-mixing zone 81 does not extend beyond the gas turbine casing 22, shown in phantom in Figure 6.

### LIST OF REFERENCE NUMERALS

- 1: Gas turbine
- 2: Compressor
- 3: Turbine
- 4: Combustor
- 5: Duct
- 6: Combustion section
- 7: Chamber
- 8: Compressed air
- 9: Hot gas
- 10: Combustion zone
- 11: Gas fuel
- 12: Oil
- 13: Casing
- 14: Pre-mix zone
- 15: Sleeve
- 16: Shell
- 17: Jacket
- 18: Steam inlet
- 19: Steam outlet
- 20: Steam
- 21: Steam passage
- 22: Casing
- 30-32: Annular passage
- 33: Fuel nozzle
- 34,35: Manifolds
- 36,37: Fuel pipes
- 38: Fuel nozzle
- 39,40: Fuel pipes
- 45,46: Fuel port
- 47-50: Swirl vanes
- 51: Baffle
- 52: Flow guides
- 53: Spray tip
- 54-57: Fuel ports
- 60-62: Liners
- 63-65: Passage outlets
- 66-68: Fuel/air mixtures
- 70-72: Sleeves
- 74: Vortex
- 80: Combustor
- 81: Pre-mix zone
- 82: Shell
- 83-86: Liners
- 87: Combustion zone
- 88-90: Passages
- 91-93: Swirl vanes
- 94: Holes
- 95: Cooling air
- 96,97: Spray bar
- 98,99: Gas fuel port
- 100-102: Passage outlets
- 103: Nozzle
- 110: Igniter
- 111: Cover plate

## Claims

1. A gas turbine (1), comprising a compressor (2) for compressing air (8), a combustor (4) for producing a hot gas (9) by burning a fuel (11,12) in said compressed air, a turbine (3) for expanding said hot gas produced by said combustor, said combustor comprising:
a combustion zone (10),
a centrally disposed first fuel nozzle (33) in flow communication with said combustion zone and having a first discharge port (54) for discharging a liquid fuel (12) and a second discharge port (55) for discharging a gaseous fuel (11),
first (31) and second (30) concentrically arranged annular passages surrounding said first fuel nozzle and in flow communication with said combustion zone,
means (38) for introducing a liquid fuel into said first passage so as to circumferentially distribute said liquid fuel around said first passage,
first means (34) for introducing a gaseous fuel into said second passage so as to circumferentially distribute said gaseous fuel around said second passage.

2. The gas turbine according to claim 1, further characterized by second means (57) for introducing a gaseous fuel into said first passage so as to circumferentially distribute said gaseous fuel around said first passage.

3. The gas turbine according to claim 2, further characterized in that the means (38) for introducung a liquid fuel is a plurality of second fuel nozzles (38) circumferentially distributed around said first passage (31), and wherein said second gas fuel introducing means comprises a first gas fuel discharge port (57) formed in each of said second fuel nozzles (38), and said liquid fuel introducing means comprises a second liquid fuel discharge port (56) formed in each of said nozzles (38).

4. The gas turbine according to claim 3, further characterized by a plurality of first swirl vanes (49) distributed circumferentially around each of said second fuel nozzles (38).

5. The gas turbine according to claim 4, further characterized in that said first passage has (31) an inlet in flow communication with said compressor (2), whereby said inlet receives a first portion of said compressed air (8) from said compressor, and said first swirl vanes (49) are disposed downstream of said first passage inlet and between said first gas fuel discharge ports (57) and said combustion zone (10), whereby said first swirl vanes create pre-mixing of said first portion of said compressed air and a gaseous fuel from said first gas fuel ports prior to said compressed air and said gas fuel entering said combustion zone.

6. The gas turbine according to claim 4, further characterized by a plurality of second swirl vanes (50) distributed circumferentially around said second passage (30), and characterized in that said first gas fuel introducing means (34) comprises a plurality of second gas fuel discharge ports (45) circumferentially arrayed within said second passage, said second passage has an inlet in flow communication with said compressor (2), whereby said inlet receives a second portion of said compressed air (8) from said compressor, and said second swirl vanes are disposed between said second gas fuel discharge ports and said combustion zone (10), whereby said second swirl vanes create pre-mixing of said second portion of said compressed air and a gaseous fuel from said second gaseous fuel discharge ports prior to said second portion of said compressed air and said gas fuel entering said combustion zone.

7. The gas turbine according to claim 6, further characterized by a third annular passage (32) concentrically arranged with respect to said first (31) and second (32) passages, said third passage surrounding said first fuel nozzle (33) and in flow communication with said combustion zone (10), third means (35) for introducing a gaseous fuel into said third passage so as to circumferentially distribute said gaseous fuel around said third passage, a plurality of third swirl vanes (48) distributed circumferentially around said third passage, and wherein:
said third gas fuel introducing means comprises a plurality of third gas fuel discharge ports (45) circumferentially arrayed within said third passage;
said third passage has an inlet in flow communication with said compressor (2), whereby said inlet receives a third portion of said compressed air (8) from said compressor; and
said third swirl vanes are disposed between said third gas fuel discharge ports and said combustion zone, whereby said third swirl vanes create pre-mixing of said third portion of said compressed air and a gaseous fuel from said third gaseous fuel discharge ports prior to said third portion of said compressed air and said gas fuel entering said combustion zone.

8. The gas turbine according to any of claims 1-7, further characterized in that said liquid fuel introducing means comprises a plurality of fuel nozzles (38) circumferentially arrayed within said first annular passage (31), each of said fuel nozzles having a liquid fuel discharge port (56) formed therein.

9. The gas turbine according to claim 1 or 6, further characterized in that said first gas fuel introducing means comprises a plurality of gas fuel discharge ports (45) circumferentially arrayed within said second passage (30).

10. The gas turbine according to claim 9, further characterized in that said first gas fuel introducing means comprises a toroidal gas fuel manifold (34) extending around said second passage (30), said gas fuel discharge ports (45) being distributed around said toroidal manifold.

11. The gas turbine according to claim 1, further characterized by a third annular passage (32) concentrically arranged with said first (31) and second (30) passages, said third passage surrounding said first fuel nozzle (33) and in flow communication with said combustion zone (10).

12. The gas turbine according to claim 11, further characterized by means (35) for introducing a gaseous fuel (11) into said third passage so as to circumferentially distribute said gaseous fuel around said third passage.

13. The gas turbine according to claim 12, characterized in that said third passage (32) surrounds said first (31) and second (30) passages.

14. The gas turbine according to claim 13, characterized in that said first passage (31) is disposed between said second (31) and third (32) passages.

## Patentansprüche

1. Gasturbine (1), die einen Kompressor (2) zum Verdichten von Luft (8) umfasst, eine Verbrennungskammer (4) zum Herstellen eines heißen Gases (9) durch Brennen eines Brennstoffs (11,12) in der Druckluft, eine Turbine (3) zum Ausdehnen des von der Verbrennungskammer hergestellten heißen Gases, wobei die Verbrennungskammer folgendes umfasst:
eine Verbrennungszone (10),
eine zentral angeordnete erste Brennstoffdüse (33) in Strömungsverbindung mit der Verbrennungszone und mit einer ersten Entlassungsöffnung (54) zum Entlassen eines flüssigen Brennstoffs (12) und einer zweiten Eintlassungsöffnung (55) zum Entlassen eines gasförmigen Brennstoffs (11),
erste (31) und zweite (30) konzentrisch angeordnete ringförmige Durchgänge, die die erste Brennstoffdüse umgeben und in Strömungsverbindung mit der Verbrennungszone sind,
ein Mittel (38) zum Einführen eines flüssigen Brennstoffs in den ersten Durchgang, um den flüssigen Brennstoff um den ersten Durchgang peripher zu verteilen,
ein erstes Mittel (34) zum Einführen eines gasförmigen Brennstoffs in den zweiten Durchgang, um den gasförmigen Brennstoff um den zweiten Durchgang peripher zu verteilen.

2. Gasturbine nach Anspruch 1, weiterhin gekennzeichnet durch ein zweites Mittel (57) zum Einführen eines gasförmigen Brennstoffs in den ersten Durchgang, um den gasförmigen Brennstoff um den ersten Durchgang peripher zu verteilen.

3. Gasturbine nach Anspruch 2, weiterhin dadurch gekennzeichnet, dass das Mittel (38) zum Einführen eines flüssigen Brennstoffs eine Vielzahl von zweiten Brennstoffdüsen (38) ist, die peripher um den ersten Durchgang (31) verteilt sind, und worin das zweite Gasbrennstoffeinführungsmittel eine erste Gasbrennstoffentlassungsöffnung (57) umfasst, die in jeder der zweiten Brennstoffdüsen (38) gebildet ist, und das flüssige Brennstoffeinführungsmittel eine zweite flüssige Brennstoffentlassungsöffnung (5) umfasst, die in jeder der Düsen (38) gebildet ist

4. Gasturbine nach Anspruch 3, weiterhin gekennzeichet durch eine Vielzahl von ersten Wirbelblechen (49), die um jede der zweiten Brennstoffdüsen (38) peripher verteilt sind.

5. Gasturbine nach Anspruch 4, weiterhin dadurch gekennzeichnet, dass der erste Durchgang (31) einen Einlass in Strömungsverbindung mit dem Kompressor (2) hat, wobei der Einlass ein erstes Teil der Druckluft (8) von dem Kompressor empfängt, und die ersten Wirbelblech (49) stromab von dem ersten Durchgangseinlass und zwischen den ersten Gasbrennstoffentlassungsöffnungen (57) und der Verbrennungszone (10) angeordnet sind, wobei die ersten Wirbelbleche Vormischung des ersten Teils der Druckluft und eines gasförmigen Brennstoffs von den ersten Gasbrennstofföffnungen schaffen, bevor die Druckluft und der Gasbrennstoff in die Verbrennungszone eintreten.

6. Gasturbine nach Anspruch 4, weiterhin gekennzeichnet durch eine Vielzahl von zweiten Wirbelblechen (50), die um den zweiten Durchgang (30) peripher verteilt sind und dadurch gekennzeichnet, dass das erste Gasbrennstoffeinführungmittel (34) ein Vielzahl von zweiten Gasbrennstoffentlassungsöffnungen (45) umfasst, die in dem zweiten Durchgang peripher angeordnet sind, wobei der zweite Durchgang einen Einlass in Strömungsverbindung mit dem Kompressor (2) hat, wobei der Einlass ein zweites Teil der Druckluft (8) von dem Kompressor empfängt, und die zweiten Wirbelbleche zwischen den zweiten Gasbrennstoffentlassungsöffnungen und der Verbrennungszone (10) angeordnet sind, wobei die zweiten Wirbelbleche Vormischung des zweiten Teils der Druckluft und eines gasförmigen Brennstoffs von den zweiten gasförmigen Brennstofföffnungen schaffen, bevor der zweite Teil der Druckluft und der Gasbrennstoff in die Verbrennungszone eintreten.

7. Gasturbine nach Anspruch 6, weiterhin gekennzeichnet durch einen dritten ringförmigen Durchgang (32), der konzentrisch mit Bezug auf die ersten (31) und zweiten (30) Durchgänge angeordnet ist, wobei der dritte Durchgang die erste Brennstoffdüse (33) umgibt und in Strömungsverbindung mit der Verbrennungszone (10) steht, ein drittes Mittel (35) zum Einführen eines gasförmigen Brennstoffs in den dritten Durchgang, um den gasförmigen Brennstoff um den dritten Durchgang peripher zu verteilen eine Vielzahl von dritten Wirbelblechen (48), die um den dritten Durchgang peripher verteilt sind, und in der:
das dritte Gasbrennstoffeintführungsmittel eine Vielzahl von dritten Gasbrennstoffentlassungsöffnungen (45) umfasst, die in dem dritten Durchgang peripher angeordnet sind;
der dritte Durchgang ein Einlass in Strömungsverbindung mit dem Kompressor (2) hat, wobei der Einlass ein drittes Teil der Druckluft (8) von dem Kompressor empfängt; und
die dritten Wirbelbleche zwischen den dritten Gasbrennstoffentlassungsöffnungen und der Verbrennungszone angeordnet sind, wobei die dritten Wirbelbleche Vormischung des dritten Teils der Druckluft und eines gasförmigen Brennstoffs von den dritten gasförmigen Brennstoffentlassungsöffnungen schaffen, bevor das dritte Teil der Druckluft und des Gasbrennstoffs in die Verbrennungszone eintreten.

8. Gasturbine nach einem der Ansprüche 1-7, weiterhin dadurch gekennzeichnet, dass das flüssige Brennstoffeinführungsmittel eine Vielzahl von Brennstoffdüsen (38) umfasst, die in dem ersten ringförmigen Durchgang (31) peripher angeordnet sind, wobei jede der Brennstoffdüsen eine darin gebildete flüssige Brennstoffentlassungsöffnung hat.

9. Gasturbine nach Anspruch 1 oder 6, weiterhin dadurch gekennzeichnet, dass das erste Gasbrennstoffeinführungsmittel eine Vielzahl von Gasbrennstoffentlassungsöffnungen (45) umfasst, die in dem zweiten Durchgang peripher angeordnet sind.

10. Gasturbine nach Anspruch 9, weiterhin dadurch gekennzeichnet, dass das erste Gasbrennstoffeinführungmittel einen toroidalen Gasbrennstoffverteiler (34) umfasst, der sich um den zweiten Durchgang (30) erstreckt, wobei die Gasbrennstoffentlassungsöffnungen (45) um den toroidalen Verteiler verteilt sind

11. Gasturbine nach Anspruch 1, weiterhin gekennzeichnet durch einen dritten ringförmigen Durchgang (32), der konzentrisch mit den ersten (31) und den zweiten (30) Durchgängen angeordnet ist, wobei der dritte Durchgang die erste Brennstoffdüse (33) umgibt und in Strömungsverbindung mit der Verbrennungszone (10) ist.

12. Gasturbine nach Anspruch 11, weiterhin gekennzeichnet durch ein Mittel (35) zum Einführen eines gasförmigen Brennstoffs (11) in den dritten Durchgang, um den gasförmigen Brennstoff um den dritten Durchgang peripher zu verteilen.

13. Gasturbine nach Anspruch 12, dadurch gekennzeichnet, dass der dritte Durchgang (32) die ersten (31) und zweiten (30) Durchgänge umgibt.

14. Gasturbine nach Anspruch 13, dadurch gekennzeichnet, dass der erste Durchgang (31) zwischen den zweiten (30) und dritten (32) Durchgängen angeordnet ist.

## Revendications

1. Turbine à gaz (1) comprenant un compresseur (2) servant à comprimer de l'air (8), une chambre de combustion (4) servant à produire un gaz chaud (9) en brûlant un combustible (11, 12) dans ledit air comprimé, une turbine (3) servant à détendre ledit gaz chaud produit par ladite chambre de combustion, ladite chambre de combustion comprenant :
- une zone de combustion (10),
- un premier injecteur de combustible (33) placé de manière centrale et en communication d'écoulement avec ladite zone de combustion, comportant un premier orifice de décharge (54) servant à envoyer un combustible liquide (12) et un deuxième orifice de décharge (22) servant à envoyer un combustible gazeux (11),
- des premier (31) et deuxième (30) passages annulaires concentriques qui entourent ledit premier injecteur de combustible et sont en communication d'écoulement avec ladite zone de combustion,
- un moyen (38) servant à introduire un combustible liquide dans ledit premier passage de manière à répartir circonférentiellement ledit combustible liquide autour dudit premier passage, et
- un premier moyen (34) servant à introduire un combustible gazeux dans ledit deuxième passage de manière à répartir circonférentiellement ledit combustible gazeux autour dudit deuxième passage.

2. Turbine à gaz selon la revendication 1, caractérisée en outre par un deuxième moyen (57) servant à introduire un combustible gazeux dans ledit premier passage de manière à répartir circonférentiellement ledit combustible gazeux autour dudit premier passage.

3. Turbine à gaz selon la revendication 2, caractérisée en outre en ce que ledit moyen (38) d'introduction d'un combustible liquide est formé d'une pluralité de deuxièmes injecteurs de combustible (38) répartis circonférentiellement autour dudit premier passage (31), et dans laquelle ledit deuxième moyen d'introduction d'un combustible gazeux comprend un premier orifice (57) de décharge de combustible gazeux formé dans chacun des deuxièmes injecteurs de combustible (38), et ledit moyen d'introduction d'un combustible liquide comprend un deuxième orifice (56) de décharge de combustible liquide formé dans chacun desdits injecteurs (38).

4. Turbine à gaz selon la revendication 3, caractérisée en outre par une pluralité de premières ailettes de tourbillonnement (49) réparties circonférentiellement autour de chacun desdits deuxièmes injecteurs de combustible (38).

5. Turbine à gaz selon la revendication 4, caractérisée en outre en ce que ledit premier passage a une entrée (31) en communication d'écoulement avec ladite chambre de combustion (2), si bien que ladite entrée reçoit une première partie dudit air comprimé (8) en provenance dudit compresseur, et lesdites premières ailettes de tourbillonnement (49) sont disposées en aval de ladite entrée du premier passage et entre lesdits premiers orifices (57) de décharge de combustible gazeux et ladite zone de combustion (10), si bien que lesdites premières ailettes de tourbillonnement provoquent un pré-mélange de ladite première partie dudit air comprimé et d'un combustible gazeux provenant desdits premiers orifices de décharge de combustible gazeux avant que ledit air comprimé et ledit combustible gazeux n'entrent dans ladite zone de combustion.

6. Turbine à gaz selon la revendication 4, caractérisée en outre par une pluralité de deuxièmes ailettes de tourbillonnement (50) réparties circonférentiellement autour dudit deuxième passage (30) et caractérisée en ce que ledit premier moyen (34) d'introduction d'un combustible gazeux comprend une pluralité de deuxièmes orifices (45) de décharge de combustible gazeux arrangés circonférentiellement à l'intérieur dudit deuxième passage, ledit deuxième passage a une entrée en communication d'écoulement avec ledit compresseur (2), si bien que ladite entrée reçoit une deuxième partie dudit air comprimé (8) en provenance dudit compresseur, et lesdites deuxièmes ailettes de tourbillonnement sont disposées entre lesdits deuxièmes orifices de décharge de combustible gazeux et ladite zone de combustion (10), si bien que lesdites deuxièmes ailettes de tourbillonnement provoquent un pré-mélange de ladite deuxième partie dudit air comprimé et d'un combustible gazeux provenant desdits deuxièmes orifices de décharge de combustible gazeux avant que ladite deuxième partie dudit air comprimé et ledit combustible gazeux n'entrent dans ladite zone de combustion.

7. Turbine à gaz selon la revendication 6, caractérisée en outre par un troisième passage annulaire (32) concentrique auxdits premier (31) et deuxième (32) passages, ledit troisième passage entourant ledit premier injecteur de combustible (33) et étant en communication d'écoulement avec ladite zone de combustion (10), un troisième moyen (35) servant à introduire un combustible gazeux dans ledit troisième passage de manière à répartir circonférentiellement ledit combustible gazeux autour dudit troisième passage, une pluralité de troisièmes ailettes de tourbillonnement (48) réparties circonférentiellement autour dudit troisième passage, et dans laquelle :
ledit troisième moyen d'introduction de combustible gazeux comprend une pluralité de troisièmes orifices (45) de décharge de combustible gazeux, arrangés circonférentiellement à l'intérieur dudit troisième passage,
ledit troisième passage a une entrée en communication d'écoulement avec ledit compresseur (2), si bien que ladite entrée reçoit une troisième partie dudit air comprimé (8) en provenance dudit compresseur, et
lesdites troisièmes ailettes de tourbillonnement sont disposées entre lesdits troisièmes orifices de décharge de combustible gazeux et ladite zone de combustion, si bien que lesdites troisièmes ailettes de tourbillonnement provoquent un pré-mélange de ladite troisième partie dudit air comprimé et d'un combustible gazeux provenant desdits troisièmes orifices de décharge de combustible gazeux avant que ladite troisième partie dudit air comprimé et ledit combustible gazeux n'entrent dans ladite zone de combustion.

8. Turbine à gaz selon l'une quelconque des revendications 1 à 7, caractérisée en outre en ce que ledit moyen d'introduction d'un combustible liquide comprend une pluralité d'injecteurs de combustible (38) arrangés circonférentiellement à l'intérieur dudit premier passage annulaire (31), un orifice (56) de décharge de combustible liquide étant formé dans chacun desdits injecteurs de combustible.

9. Turbine à gaz selon la revendication 1 ou 6, caractérisée en outre en ce que ledit premier moyen d'introduction d'un combustible gazeux comprend une pluralité d'orifices (45) de décharge de combustible gazeux arrangés circonférentiellement à l'intérieur dudit deuxième passage (30).

10. Turbine à gaz selon la revendication 9, caractérisée en outre en ce que ledit premier moyen d'introduction d'un combustible gazeux comprend un distributeur (34) de combustible gazeux en forme de tore, qui s'étend autour dudit deuxième passage (30), lesdits orifices (45) de décharge de combustible gazeux étant répartis autour dudit distributeur en forme de tore.

11. Turbine à gaz selon la revendication 1, caractérisée en outre par un troisième passage annulaire (32) concentrique auxdits premier (31) et deuxième (30) passages, ledit troisième passage entourant ledit premier injecteur de combustible (33) et étant en communication d'écoulement avec ladite zone de combustion (10).

12. Turbine à gaz selon la revendication 11, caractérisée en outre par un moyen (35) servant à introduire un combustible gazeux (11) dans ledit troisième passage de manière à répartir circonférentiellement ledit combustible gazeux autour dudit troisième passage.

13. Turbine à gaz selon la revendication 12, caractérisée en ce que ledit troisième passage (32) entoure lesdits premier (31) et deuxième (30) passages.

14. Turbine à gaz selon la revendication 13, caractérisée en ce que ledit premier passage (31) est disposé entre lesdits deuxième (30) et troisième (32) passages.
